# EUROPÄISCHE PATENTSCHRIFT

(11) **EP 2 213 352 B1**
(45) Veröffentlichungstag und Bekanntmachung des Hinweises auf die Patenterteilung: **14.08.2013**
(21) Anmeldenummer: 10000642.8
(22) Anmeldetag: 22.01.2010
(51) Int. Cl.: B01D 3/08, B01L 9/04

(54) **Sicherungsvorrichtung für einen Rotationsverdampfer**
Securing device for a Rotation evaporator
Dispositif de sécurité pour un evaporateur rotatif

(30) Priorität: 30.01.2009 DE 102009006816
(43) Veröffentlichungstag der Anmeldung: 04.08.2010
(73) Patentinhaber: Hans Heidolph GmbH & Co. KG, 93309 Kelheim (DE)
(72) Erfinder: Carl, Joachim, 90547 Stein (DE)
(74) Vertreter: Manitz, Finsterwald & Partner GbR

(56) Entgegenhaltungen:
- DE-A1- 19 710 745
- DE-U- 9 202 692
- US-A- 5 152 375

## Beschreibung

Die vorliegende Anmeldung betrifft einen Rotationsverdampfer mit einer Vorrichtung zum Sichern einer eine Schliffhülse und einen Schliffkern umfassenden Schliffverbindung insbesondere zwischen einem Verdampferkolben und einer Dampfdurchführung. Ein derartiger Rotationsverdampfer ist aus der US 5,152,375 bekannt.

Bei einem Rotationsverdampfer handelt es sich um ein Laborgerät, das ein Heizbad und einen in das Heizbad eintauchbaren Verdampferkolben umfasst. Im Betrieb wird ein in dem Heizbad befindliches flüssiges Medium, beispielsweise Wasser oder - für höhere Temperaturen - Öl, geheizt, um damit den in das Heizbad eingetauchten Verdampferkolben zu erwärmen. Hierdurch kann ein in dem Verdampferkolben enthaltenes Flüssigkeitsgemisch erwärmt werden, so dass das jeweilige Destillat, insbesondere Lösungsmittel, verdampft wird. Das verdampfte Destillat strömt dann in einen Kühler des Rotationsverdampfers, um dort zu kondensieren. Anschließend wird das Kondensat in einem Auffangkolben gesammelt. Der im Verdampferkolben zurückbleibende Destillationsrückstand kann weiter aufgearbeitet oder analysiert werden. Häufig ist zusätzlich eine Vakuumpumpe zur Erzeugung eines Vakuums in dem Verdampferkolben und dem Kühler vorgesehen, um die Siedetemperatur zu senken, wodurch die Destillation beschleunigt und die Destillationsrate erhöht werden kann.

Darüber hinaus umfasst ein Rotationsverdampfer einen Rotationsantrieb zum Drehen des Verdampferkolbens in dem Heizbad. Durch die Rotation wird der Verdampferkolben gleichmäßig beheizt und an der beheizten Innenwand des Verdampferkolbens wird ein dünner, eine große Oberfläche aufweisender Flüssigkeitsfilm erzeugt, aus dem das Destillat schnell, effizient und schonend verdampft werden kann.

Um den beispielsweise über eine Schliffverbindung mit der eingangs genannten Dampfdurchführung drehfest verbundenen Rotationsverdampfer in Rotation zu versetzen, wird die üblicherweise als Glashohlwelle ausgebildete Dampfdurchführung, die zum Durchleiten des verdampften Destillats von dem Verdampferkolben an den Kühler dient, von dem Rotationsantrieb rotierend angetrieben. Üblicherweise wird eine derartige Schliffverbindung mit einer Keck-Klemme gesichert.

Bei einer Keck-Klemme sind zwei jeweils teilringförmige Schnappverbinder, die sich in zwei zueinander parallelen Ebenen erstrecken, über mehrere Stege miteinander verbunden. Zum Sichern der Schliffverbindung wird die Keck-Klemme derart aufgesteckt, dass der eine der beiden Schnappverbinder die Schliffhülse des Verdampferkolbens hinter einem Bördelrand der Schliffhülse und der andere der beiden Schnappverbinder den Schliffkern der Dampfdurchführung hinter einer sich an den Schliffkern anschließenden Abkragung umgreifend umschließt.

Durch die Stegkopplung führt ein Aufweiten des einen Schnappverbinders unmittelbar auch zu einem Aufweiten des anderen Schnappverbinders. Dies ist dann von Nachteil, wenn entweder der schliffhülsenseitig oder schliffkernseitig umgriffene Abschnitt der Schliffverbindung einen größeren Außendurchmesser aufweist als erwartet, wie dies aufgrund von Abweichungen bei der Fertigung von Glasgeräten häufig der Fall ist. Beispielsweise kann es vorkommen, dass die Schliffhülse des Verdampferkolbens an dem umgriffenen Abschnitt einen zu großen Außendurchmesser aufweist, wodurch der schliffhülsenseitige Schnappverbinder entsprechend aufgeweitet wird, und über die Stegkopplung dann auch der schliffkernseitige Schnappverbinder. Im Extremfall kann die Aufweitung derart weit sein, dass bei lockerer Schliffverbindung der schliffkernseitige Schnappverbinder über die Abkragung und damit der Verdampferkolben von der Dampfdurchführung rutschen kann.

Das Dokument US 5,152,375 offenbart einen Rotationsverdampfer mit einer Vorrichtung zum Sichern einer eine Schliffhülse und einen Schliffkern umfassenden Schliffverbindung zwischen einem Verdampferkolben und einer Dampfdurchführung, wobei die Sicherungsvorrichtung schliffkernseitig einen Befestigungsabschnitt und schliffhülsenseitig einen an dem Befestigungsabschnitt zwischen einer Freigabestellung und einer Haltestellung verschwenkbar gelagerten Verbinder aufweist, um den Verdampferkolben wahlweise freizugeben oder festzuhalten, wobei der Verbinder einen Halteabschnitt umfasst, der dazu ausgelegt ist, in der Haltestellung des Verbinders einen Bördelrand des Verdampferkolbens zu hintergreifen, wobei der Halteabschnitt des Verbinders teilringförmig mit einem sich über mehr als 180° erstreckenden Kreisbogen ausgebildet ist.

Der Erfindung liegt die Aufgabe zugrunde, einen Rotationsverdampfer der eingangs genannten Art zu schaffen, der eine zuverlässigere Sicherung einer Schliffverbindung gewährleisten kann.

Diese Aufgabe wird durch einen Rotationsverdampfer mit den Merkmalen des Anspruchs 1 gelöst und insbesondere dadurch, dass die Sicherungsvorrichtung schliffkernseitig einen Befestigungsabschnitt und schliffhülsenseitig einen an dem Befestigungsabschnitt zwischen einer Freigabestellung und einer Haltestellung verschwenkbar gelagerten Schnappverbinder aufweist, um das schliffhülsenseitige Laborgerät, insbesondere den Verdampferkolben, wahlweise freizugeben oder festzuhalten.

Der Befestigungsabschnitt kann - insbesondere ohne Ausbildung einer Schnappverbindung - an einem Bauteil, durch das das schliffkernseitige Laborgerät, insbesondere die Dampfdurchführung, hindurchführbar ist, insbesondere einem Spannorgan zum Verspannen eines Klemmeinsatzes zum Verklemmen der Dampfdurchführung in einer Nabe eines Rotationsantriebs des Rotationsverdampfers, oder direkt an dem schliffkernseitigen Laborgerät befestigt oder montiert werden. Bevorzugt ist der Befestigungsabschnitt ringförmig ausgebildet, insbesondere geschlossen ringförmig.

Schliffhülsenseitig hingegen ist ein an dem Befestigungsabschnitt gelagerter Schnappverbinder vorgesehen. Der insbesondere bügelartige Schnappverbinder ist zwischen einer Freigabestellung und einer Haltestellung verschwenkbar. In der Freigabestellung wird das schliffhülsenseitige Laborgerät, schwenkbar. In der Freigabestellung wird der Verdampferkolben von dem Schnappverbinder freigegeben. In der Haltestellung ist der Schnappverbinder auf die Schliffhülse des Verdampferkolbens eingeschnappt, d.h. der Verdampferkolben wird von dem Schnappverbinder gehalten, insbesondere durch Formschluss.

Die erfindungsgemäße Vorrichtung erfüllt ihre Sicherungsfunktion unabhängig von einer Durchmesservariation des Halses des Verdampferkolbens. Der Verdampferkolben kann - insbesondere unabhängig von der Stellung des Befestigungsabschnitts an dem vorgenannten Bauteil - von der Sicherungsvorrichtung so lange festgehalten werden, wie sich der Schnappverbinder in der Haltestellung befindet.

Im Gegensatz zu einer Keck-Klemme weist die erfindungsgemäße Sicherungsvorrichtung nur einen Schnappverbinder auf. Insbesondere wirkt eine Verformung des schliffhülsenseitigen Schnappverbinders nicht auf die Befestigung und/oder die Form des schliffkernseitigen Befestigungsabschnitts zurück.

Nach einer Ausbildung der Erfindung ist der Befestigungsabschnitt als Schraubring, insbesondere mit einem Innengewinde, ausgebildet. Insbesondere kann der Schraubring auf ein Außengewinde des vorgenannten Bauteils oder der Dampfdurchführung aufschraubbar sein. Ein Schraubring gewährleistet eine schnell und einfach herzustellende Befestigung der Sicherungsvorrichtung. Darüber hinaus kann der Schraubring auch in der Freigabestellung des Schnappverbinders unverlierbar, beispielsweise an dem vorgenannten Bauteil, gehalten werden.

Der Schnappverbinder kann lediglich einen Schwenkarm aufweisen, mit dem der Schnappverbinder an dem Befestigungsabschnitt angelenkt ist. Für eine besonders stabile und robuste Anbindung weist der Schnappverbinder jedoch bevorzugt zwei Schwenkarme auf, die jeweils an einer von zwei einander insbesondere diametral gegenüberliegenden Seiten des Befestigungsabschnitts an dem Befestigungsabschnitt angelenkt sind.

Der Schnappverbinder umfasst einen Halteabschnitt, der dazu ausgelegt ist, in der Haltestellung des Schnappverbinders einen Bördelrand eines schliffhülsenseitigen Laborgeräts zu hintergreifen. Um eine Schnappverbindung zwischen dem Schnappverbinder und einem schliffhülsenseitigen Laborgerät zu ermöglichen, ist der Halteabschnitt des Schnappverbinders teilringförmig mit einem sich über mehr als 180° erstreckenden Kreisbogen ausgebildet. Der Halteabschnitt ist federelastisch verformbar ausgebildet.

Der. Halteabschnitt kann eine Ebene festlegen, die in der Haltestellung des Schnappverbinders zumindest im Wesentlichen senkrecht zu einer Längs- und/oder Drehachse des Befestigungsabschnitts verläuft. In der Haltestellung können die vorgenannten Schwenkarme parallel zu der vorgenannten Längs- und/oder Drehachse des Befestigungsabschnitts verlaufen.

Nach einer anderen Ausbildung der Erfindung wird der Befestigungsabschnitt von der Schwenkachse des Schnappverbinders mittig durchsetzt. Durch die mittige Anlenkung des Schnappverbinders an dem Befestigungsäbschnitt kann eine Sicherungsvorrichtung geschaffen werden, die sowohl in der Freigabestellung des Schnappverbinders als auch in der Haltestellung eine besonders kompakte Form aufweist.

Bevorzugt weist der Schwenkbereich des Schnappverbinders einen Wert zwischen 60° und 120° auf. Besonders bevorzugt beträgt der vorgenannte Wert zumindest im Wesentlichen 90°. Vorzugsweise sind die Schwenkbereichsgrenzen jeweils durch einen Anschlag vorgegeben.

Nach einer weiteren Ausbildung der Erfindung weist der Befestigungsabschnitt einen Abdrückabschnitt und/oder -mechanismus auf, durch den der Verdampferkolben von der Dampfdurchführung abdrückbar ist. Dies ist insbesondere dann von Vorteil, wenn die Schliffverbindung klemmt und sich anders nicht mehr lösen lässt.

Um den Befestigungsabschnitt gut betätigen zu können, insbesondere um ein Aufschrauben auf ein Außengewinde zu erleichtern, ist an der Außenfläche des Befestigungsabschnitts eine Greifriffelung vorgesehen.

Vorzugsweise sind der Befestigungsabschnitt und der Schnappverbinder jeweils einstückig und/oder aus Kunststoff ausgebildet.

Es kann ein Spannorgan zum Verspannen eines Klemmeinsatzes zum Verklemmen der Dampfdurchführung in einer Nabe eines Rotationsantriebs des Rotationsverdampfers vorgesehen sein, wobei die Sicherungsvorrichtung an dem Spannorgan und das Spannorgan an einem Rotationsantrieb des Rotationsverdampfers befestigbar ist.

Insbesondere ist das Spannorgan als Spannschraubring mit einem Innengewinde ausgebildet sein, wobei der Spannschraubring auf die Nabe des Rotationsantriebs aufschraubbar ist.

Die Erfindung betrifft ferner eine Vorrichtung zum Sichern einer eine Schliffhülse und einen Schliffkern umfassenden Schliffverbindung zwischen zwei Laborgeräten, insbesondere zwischen einem Verdampferkolben und einer Dampfdurchführung eines Rotationsverdampfers, wobei die Sicherungsvorrichtung schliffkernseitig einen Befestigungsabschnitt und schliffhülsenseitig einen an dem Befestigungsabschnitt zwischen einer Freigabestellung und einer Haltestellung verschwenkbar gelagerten Schnappverbinder aufweist, um das schliffhülsenseitige Laborgerät wahlweise freizugeben oder festzuhalten.

Vorteilhafte Weiterbildungen der erfindungsgemäßen Sicherungsvorrichtung ergeben sich in analoger Weise aus den vorstehend zu dem erfindungsgemäßen Rotationsverdampfer beschriebenen Weiterbildungen.

Vorteilhafte Ausführungsformen der Erfindung sind auch in den Unteransprüchen, der Figurenbeschreibung und der Zeichnung angegeben.

Die Erfindung wird im Folgenden beispielhaft unter Bezugnahme auf die Zeichnung beschrieben, es zeigen, jeweils in schematischer Darstellung,
- Fig. 1: eine perspektivische Ansicht eines Rotationsverdampfers,
- Fig. 2a: einen Teilquerschnitt entlang einer Längsachse einer Nabe eines Rotationsantriebs eines Rotationsverdampfer mit eingesetzter Klemmhülse und eingesetzter Dampfdurchführung, sowie eine Schliffklemme und einen Verdampferkolben,
- Fig. 2b: einen vergrößerten Ausschnitt aus dem Bereich A aus Fig. 2a,
- Fig. 3: eine perspektivische Ansicht der Klemmhülse aus Fig. 2a
- Fig. 4: die Nabe aus Fig. 2a in vergrößerter Einzeldarstellung,
- Fig. 5: eine perspektivische Ansicht der Schliffklemme aus Fig. 2a in einer Haltestellung, und
- Fig. 6: eine perspektivische Ansicht der Schliffklemme aus Fig. 2a in einer Freigabestellung.

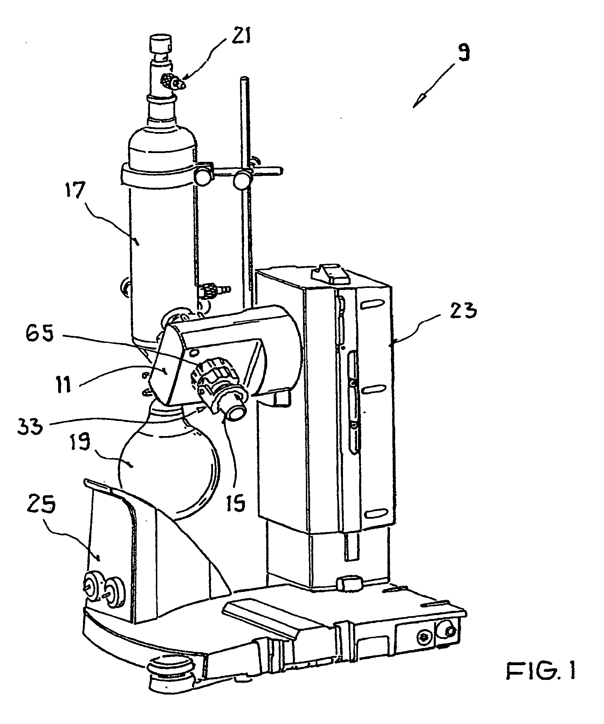

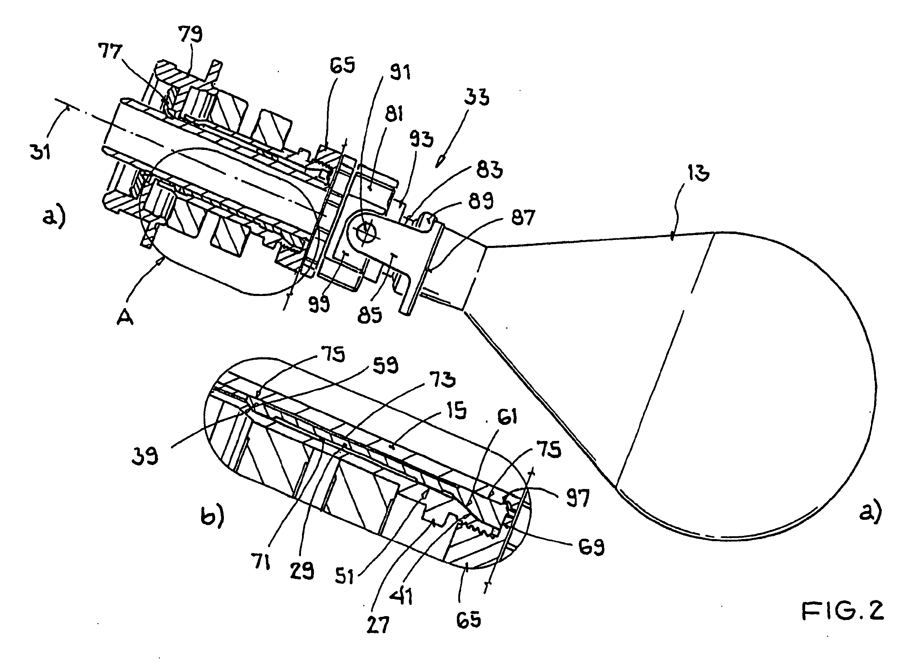

Der in Fig. 1 dargestellte Rotationsverdampfer 9 umfasst einen Rotationsantrieb 11 für einen lediglich in Fig. 2 dargestellten, als Rundkolben oder V-Kolben oder dergleichen ausgebildeten Verdampferkolben 13, der in einem nicht dargestellten Heizbad erwärmt werden kann, um aus einem darin befindlichen Flüssigkeitsgemisch ein Destillat zu verdampfen. Das verdampfte Destillat gelangt dann über eine durch den Rotationsantrieb 11 hindurchgeführte Dampfdurchführung 15, von der in Fig. 1 lediglich ein schräg nach unten aus dem Rotationsantrieb 11 herausstehender Schliffkern erkennbar ist, in einen Kühler 17, um dort zu kondensieren. Das kondensierte Destillat wird dann in einem Auffangkolben 19 gesammelt.

An dem Kühler 17 ist ein Vakuumanschluss 21 vorgesehen, um an den Kühler 17 und den Verdampferkolben 13 ein durch eine Vakuumpumpe erzeugtes Vakuum anzulegen, wodurch die Siedetemperatur für das Destillat gesenkt werden kann. Außerdem umfasst der Rotationsverdampfer 9 einen Lift 23, der den Rotationsantrieb 11 trägt und diesen in vertikaler Richtung verfahren kann, um den Verdampferkolben 13 in das Heizbad abzusenken oder aus diesem anzuheben. Darüber hinaus umfasst der Rotationsverdampfer 9 eine Bedieneinheit 25 zur Steuerung des Heizbades, des Rotationsantriebs 11, der Vakuumpumpe und des Lifts 23.

Die Dampfdurchführung 15 ist durch eine Nabe 27 des Rotationsantriebs 11 hindurchgesteckt (Fig. 2) und über eine Klemmhülse 29, die sich zwischen der Nabe 27 und der Dampfdurchführung 15 befindet, in der Nabe 27 verklemmt, so dass eine Rotation der Nabe 27 des Rotationsantriebs 11 um eine Längsachse 31 der Nabe 27 zu einer entsprechenden Rotation der Klemmhülse 29, der Dampfdurchführung 15 und des mit der Dampfdurchführung 15 drehfest verbunden Verdampferkolbens 13 führt. Bei der Längsachse 31 handelt es sich dabei - im zusammengesetzten Zustand des Rotationsverdampfers 9 - um eine gemeinsame Längsachse 31 der Nabe 27, der Klemmhülse 29, der Dampfdurchführung 15 und des Verdampferkolbens 13. Die Nabe 27, die Klemmhülse 29 und die Dampfdurchführung 15 sind konzentrisch zueinander angeordnet.

Die drehfeste Verbindung zwischen der Dampfdurchführung 15 und dem Verdampferkolben 13 wird durch eine Schliffverbindung gewährleistet, insbesondere Kegelschliffverbindung, bei der die Dampfdurchführung 15 mit ihrer dem Verdampferkolben 13 zugewandten Seite, an der ein Schliffkern ausgebildet ist, in eine an einem Kolbenhals des Verdampferkolbens 13 ausgebildete Schliffhülse eingreift. Zur Sicherung der Schliffverbindung zwischen der Dampfdurchführung 15 und dem Verdampferkolben 13 ist eine Schliffklemme 33 vorgesehen.

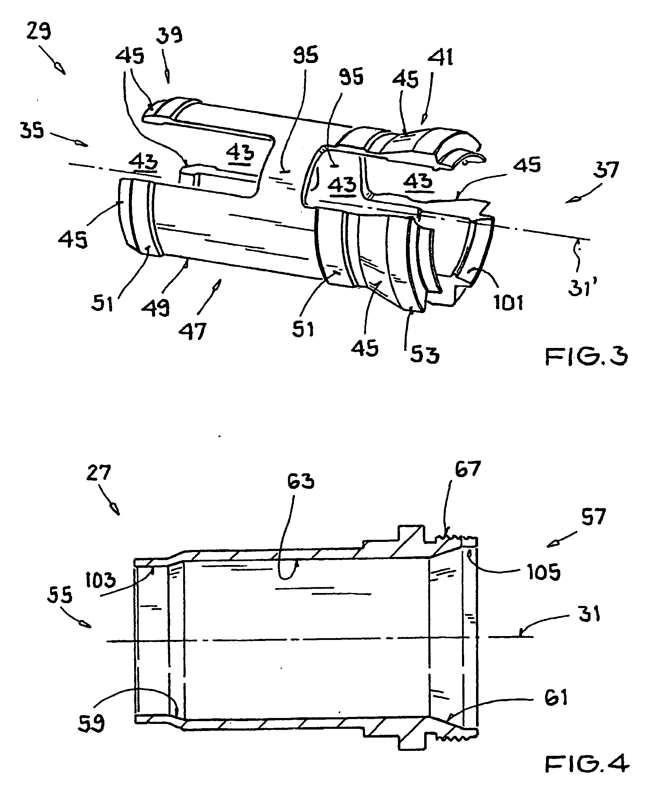

Die eine insbesondere dreizählige Rotationssymmetrie aufweisende, einstückige, aus Kunststoff bestehende Klemmhülse 29 umfasst gemäß Fig. 3 ein vorderes axiales Ende 35 und ein hinteres axiales Ende 37. Die Klemmhülse 29 wird mit ihrem vorderen Ende 35 voraus in die Nabe 27 des Rotationsantriebs 11 des Rotationsverdampfers 9 eingesetzt. Die Klemmhülse 29 weist unmittelbar an das vordere Ende 35 anschließend einen sich mit seinem Außendurchmesser nach hinten konisch erweiternden, vorderen Klemmabschnitt 39 auf. Im hinteren Bereich der Klemmhülse 29 ist ein weiterer derartiger, hinterer Klemmabschnitt 41 vorgesehen, dessen maximaler Außendurchmesser größer ist als der maximale Außendurchmesser des vorderen Klemmabschnitts 39. Da der Innendurchmesser der Klemmhülse 29 im Bereich der Klemmabschnitte 39, 41 jeweils konstant ist, nimmt die Wandstärke der Klemmhülse 29 im Bereich der Klemmabschnitte 39, 41 entsprechend zu.

Die Klemmhülse 29 weist an ihren beiden Enden 35, 37 jeweils drei längliche, zu dem jeweiligen Ende 35, 37 hin offene Einschnitte oder Durchbrechungen 43 auf, wobei auf jeder der beiden Seiten 35, 37 die jeweiligen Durchbrechungen 43 in Umfangsrichtung der Klemmhülse 29 gleichverteilt vorgesehen sind. Jeweils eine Durchbrechung 43 des ersten Endes 35 und eine Durchbrechung des zweiten Endes 37 sind entlang einer zu der Längsachse 31' der Klemmhülse 29 parallelen Geraden angeordnet.

Die jeweilige Durchbrechung 43 erstreckt sich in Längsrichtung 31' der Klemmhülse 29 und von dem jeweiligen Ende 35, 37 kommend über den ersten bzw. zweiten Klemmabschnitt 39, 41 hinweg. Jeder der beiden Klemmabschnitte 39, 41 ist hierdurch in drei teilringförmige Klemmsegmente 45 unterteilt, die entlang einer konzentrisch zu der Längsachse 31' der Klemmhülse 29 verlaufenden Kreislinie angeordnet sind.

Anders ausgedrückt ist die Klemmhülse 29 in drei teilhülsenförmige Längsabschnitte unterteilt, die gemeinsam die hülsenartige Grundform der Klemmhülse 29 bilden und über in Umfangsrichtung verlaufende Verbindungsstege 95 fest aneinander gehaltert sind. Zwischen jeweils zwei der teilhülsenförmigen Längsabschnitte ist jeweils einer der Verbindungsstege 95 angeordnet, wobei die Verbindungsstege 95 in Längsrichtung der Klemmhülse 29 gesehen auf gleicher Höhe angeordnet sind.

Zwischen den beiden Klemmabschnitten 39, 41 ist ein mittlerer Abschnitt 47 der Klemmhülse 29 angeordnet. Der mittlere Abschnitt 47 umfasst eine zylinderförmige Vertiefung 49 und zwei die Vertiefung 49 in Längsrichtung 31' der Klemmhülse 29 begrenzende, in Umfangsrichtung verlaufende, radial nach außen vorspringende Ringstege 51, die jedoch von den Durchbrechungen 43 unterbrochen sind. Die beiden Ringstege 51 besitzen jeweils einen konstanten und denselben Außendurchmesser.

Darüber hinaus ist zwischen dem hinteren Klemmabschnitt 41 und dem hinteren Ende 37 der Klemmhülse 29 ein weiterer derartiger, hinterer Ringsteg 53 vorgesehen. Der Außendurchmesser des hinteren Ringstegs 53 ist dabei konstant und entspricht dem maximalen Außendurchmesser des hinteren Klemmabschnitts 41. Außerdem umfasst die Klemmhülse 29 an ihrer ansonsten zumindest im Wesentlichen zylindrisch ausgebildeten Innenfläche zwei jeweils in Umfangsrichtung verlaufende, radial nach innen vorspringende Ringstege 75.

Wie aus Fig. 4 ersichtlich ist, weist die Nabe 27 ein vorderes axiales Ende 55, ein hinteres axiales Ende 57 sowie zwei in Längsrichtung 31 der Nabe 27 voneinander beabstandet angeordnete Kontaktabschnitte 59, 61 auf, wobei der gegenseitige Abstand der beiden Kontaktabschnitte 59, 61 dem gegenseitigen Abstand der beiden Klemmabschnitte 39, 41 der Klemmhülse 29 entspricht. Die Kontaktabschnitte 59, 61 besitzen jeweils einen sich zu dem hinteren Ende 57 der Nabe 27 konisch erweiternden Innenquerschnitt. Der maximale Innenquerschnitt des hinteren Kontaktabschnitts 61 ist dabei größer als der maximale Innenquerschnitt des vorderen Kontaktabschnitts 59.

Der vordere Kontaktabschnitt 59 der Nabe 27 bildet eine Gegenform zu dem vorderen Klemmabschnitt 39 der Klemmhülse 29, der hintere Kontaktabschnitt 61 der Nabe 27 eine Gegenform zu dem hinteren Klemmabschnitt 41 der Klemmhülse 29. Zwischen den beiden Kontaktabschnitten 59, 61, d.h. an einem mittleren Nabenabschnitt 63, und von dem jeweiligen Kontaktabschnitt 59, 61 zu dem jeweiligen Ende 55, 57 hin, ist die Nabe 27 innenseitig jeweils zylindrisch ausgebildet.

Zum Verklemmen der Dampfdurchführung 15 in der Nabe 27 des Rotationsantriebs 11 des Rotationsverdampfers 9 wird die bereits in die Nabe 27 eingeschobene und mit ihren Klemmabschnitten 39, 41 an den Kontaktabschnitten 59, 61 der Nabe 27 anliegende Klemmhülse 29 axial mit Kraft beaufschlagt. Der vordere bzw. hintere Klemmabschnitt 39, 41 der Klemmhülse 29 läuft dabei auf den vorderen bzw. hinteren konischen Kontaktabschnitt 59, 61 der Nabe 27 auf, wodurch die beiden Klemmabschnitte 39, 41 radial nach innen und damit gegen die Dampfdurchführung 15 gedrückt werden.

Die axiale Kraftbeaufschlagung wird durch einen Spannschraubring 65 bereitgestellt (Fig. 2), der auf eine an dem hinteren Ende 37 der Klemmhülse 29 ausgebildete ringförmige, sich radial zu der Längsachse 31 erstreckende Stirnfläche 69 drückt. Hierzu umfasst der Spannschraubring 65 ein Innengewinde, mit dem der Spannschraubring 65 auf die Nabe 27 aufgeschraubt wird, die mit ihrem hinteren Ende 57, an dem ein dem Innengewinde des Spannschraubrings 65 entsprechendes Außengewinde 67 ausgebildet ist, aus dem Rotationsantrieb 11 hervorsteht. Hierdurch wird Klemmhülse 29 axial verspannt.

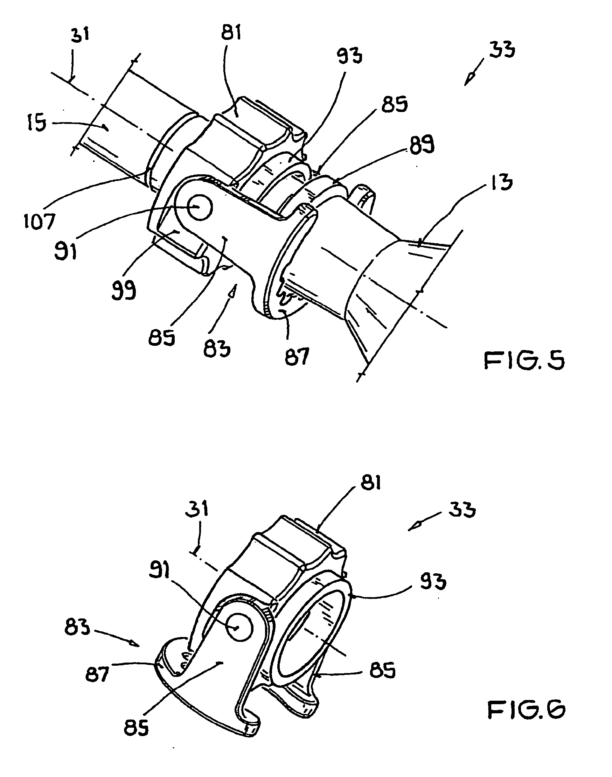

Im zusammengesetzten Zustand ist die Dampfdurchführung 15 durch die Klemmhülse 29 in der Nabe 27 verklemmt. Durch die in der Klemmhülse 29 ausgebildeten Durchbrechungen 43 kann dabei erreicht werden, dass die Klemmabschnitte 39, 41 leichter radial nach innen zusammendrückbar sind. Um eine relative axiale Ausrichtung der Dampfdurchführung 15 zu der Klemmhülse 29 festzulegen, ist an der Innenfläche der Klemmhülse 29 ein umlaufender Steg 97 ausgebildet, der in eine an der Außenfläche der Dampfdurchführung 15 als Gegenform ausgebildete Rille 107 (Fig. 5) eingreift. Von dem zweiten, hinteren Ende 37 des als Klemmhülse 29 ausgebildeten Klemmeinsatzes steht ein insbesondere keilförmig ausgebildeter, insbesondere unterbrochen umlaufender Zentrierabschnitt 101 axial ab, der im eingesetzten Zustand der Klemmhülse 29 in radialer Richtung gesehen zwischen der Dampfdurchführung 15 und einem äußeren Wandabschnitt des Spannschraubrings 65 angeordnet ist.

Zwischen der Nabe 27 und der Klemmhülse 29 ist im mittleren Bereich 47 der Klemmhülse 29 aufgrund der dort umlaufenden Vertiefung 49 ein umlaufender Freiraum 71 ausgebildet (Fig. 2b). Eine als Folge eines Kontakts mit Destillat aufquellende Klemmhülse 29 kann sich in den Freiraum 71 hinein erweitern, ohne dass es hierbei unweigerlich zu einem Festsetzen der Dampfdurchführung 15 in der Nabe 27 kommt. Dies gilt im Übrigen auch für einen Freiraum 73, der in axialer Richtung zwischen den beiden Ringstegen 75 und in radialer Richtung zwischen der Klemmhülse 29 und der Dampfdurchführung 15 ausgebildet ist.

Durch die Klemmhülse 29 mit ihren beiden Klemmabschnitten 39, 41 und der hierzu gegenförmig ausgebildeten Nabe 27 mit den beiden Kontaktabschnitte 59, 61 kann ein gute Zentrierung der Dampfdurchführung 15 in der Nabe 27 des Rotationsantriebs 11 des Rotationsverdampfers 9 und damit ein guter Rundlauf der Dampfdurchführung 15 erreicht werden. Dies ist insbesondere deshalb von Vorteil, da ein nahe zu dem vorderen Klemmabschnitt 39 vorgesehener Dichtungsring 77, der zwischen der im Betrieb rotierenden Dampfdurchführung 15 und einem Kühleranschluss 79 des stationären Kühlers 17 angeordnet ist, dabei kaum belastet wird.

Der Dichtungsring 77 besitzt folglich eine hohe Betriebslebensdauer. Darüber hinaus können durch die Klemmhülse 29 die Kontaktflächen zwischen der Dampfdurchführung 15 und der Klemmhülse 29 und zwischen der Klemmhülse 29 und der Nabe 27 minimiert werden.

Die mit der Apparatur lösbar verbindbare Schliffklemme 33 ist in den Fig. 5 und 6 näher dargestellt und umfasst schliffkernseitig, d.h. an ihrer der Dampfdurchführung 15 zugewandten Seite, einen Schraubring 81 und schliffhülsenseitig, d.h. an ihrer dem Verdampferkolben 13 zugewandten Seite, einen Schnappverbinder 83. In Fig. 5 ist die Schliffklemme 33 zusammen mit der Dampfdurchführung 15 und dem Verdampferkolben 13 gezeigt. Der Anschaulichkeit halber ist in Fig. 5 der Spannschraubring 65 weggelassen. In Fig. 6 ist die Schliffklemme 33 in einer Einzeldarstellung gezeigt.

Der Schraubring 81 weist ein Innengewinde auf, mit dem der Schraubring 81 auf ein Außengewinde des vorgenannten Spannschraubrings 65 aufschraubbar ist. Über den Schraubring 81 - insbesondere unter Vermittlung des vorgenannten Spannschraubrings 65 - kann die Schliffklemme 33 an der Nabe 27 des Rotationsantriebs 11 des Rotationsverdampfers 9 verliersicher angebracht bzw. befestigt werden. Um eine Schraubdrehung des Schraubrings 81 zu erleichtern, ist dieser - ebenso wie der Spannschraubring 65 - an seiner Außenfläche mit einer Greifriffelung versehen.

Der zumindest im Wesentlichen bügelförmige Schnappverbinder 83 ist schwenkbar und mittig an dem Schraubring 81 gelagert. Der Schnappverbinder 83 umfasst zwei Schwenkarme 85, die jeweils an einer von zwei bezüglich der Längs- und/oder Drehachse des Schraubrings 81 einander diametral gegenüberliegenden Seiten des Schraubrings 81 angelenkt sind. Darüber hinaus umfasst der Schnappverbinder 83 einen teilringförmigen Halteabschnitt 87. Der Schnappverbinder 83 ist zwischen einer in den Fig. 1, 2 und 5 dargestellten, die Schliffverbindung sichernden Haltestellung und einer in Fig. 6 dargestellten Freigabestellung verschwenkbar.

Der Schraubring 81 und der Schnappverbinder 83 sind jeweils einstückig und aus Kunststoff ausgebildet. Um die Schliffklemme 33 und die verschwenkbare Lagerung des Schnappverbinders 83 an dem Schraubring 81 zu bilden, wird der Schnappverbinder 83 über in den Schwenkarmen 85 ausgebildete Öffnungen auf an den beiden diametral gegenüberliegenden Seiten des Schraubrings 81 ausgebildete Anlenkzapfen 91 eingerastet. Der Schwenkbereich des Schnappverbinders 83 beträgt ca. 90° und ist durch den Öffnungswinkel einer dem jeweiligen Schwenkarm 83 zugeordneten Schwenkvertiefung 99 begrenzt.

Der teilkreisförmige Halteabschnitt 87 ist an derjenigen Seite offen ausgebildet, die bei einem Schwenken des Schnappverbinders 83 von der Freigabestellung in die Haltestellung vorausläuft. Wie aus Fig. 2a erkennbar ist, wird durch den Halteabschnitt 87 eine Ebene definiert, die in der Haltestellung des Schnappverbinders 83 zumindest im Wesentlichen senkrecht zu der Längs- und/oder Drehachse des Schraubrings 81 verläuft.

In der Haltestellung hintergreift der Schnappverbinder 83 mit seinem Haltabschnitt 87 einen an der Schliffhülse des Verdampferkolbens 13 ausgebildeten Bördelrand 89 und schnappt in die Schliffhülse des Verdampferkolbens 13 ein. Um ein Einschnappen zu gewährleisten, erstreckt sich der teilkreisförmige Halteabschnitt 87 über einen Kreisbogen von mehr als 180° und ist zumindest an den beiden Enden des Teilkreises ausreichend federelastisch verformbar ausgebildet. In der Haltestellung wird der Verdampferkolben 13 durch Formschluss von dem Schnappverbinder 83 gehalten. Insbesondere kann der Verdampferkolben 13 auch dann noch von dem Schnappverbinder 83 gehalten werden, wenn der Schnappverbinder 83 nicht mehr vollständig auf dem Spannschraubring 65 aufgeschraubt ist.

In der Freigabestellung gemäß Fig. 6 ist der Schnappverbinder 83 gegenüber der in den Fig. 1, 2 und 5 dargestellten Haltestellung um ca. 90° von der Längs- und/oder Drehachse der Schraubrings 81 weggeschwenkt, um den Kolbenhals und damit den Verdampferkolben 13 freizugeben.

Darüber hinaus weist der Schraubring 81 einen sich in Richtung des Verdampferkolbens 13 erstreckenden Fortsatz auf, der als Abdrückabschnitt 93 ausgebildet ist. Wenn sich die nicht (mehr) gesicherte Schliffverbindung nicht mehr lösen lässt, d.h. wenn der Verdampferkolben 13 nicht mehr von der Dampfdurchführung 15 abgezogen werden kann, dann kann durch Abschrauben der Schliffklemme 33 bzw. des Schraubrings 81 von dem Spannschraubring 65 ein Abdrücken des Verdampferkolbens 13 erreicht werden.

Durch die Schliffklemme 33 kann eine zuverlässige und einfache Sicherung der Schliffverbindung zwischen der Dampfdurchführung 15 und dem Verdampferkolben 13 erreicht werden. Abweichungen des Durchmessers der Schliffhülse und/oder des Kolbenhalses des Verdampferkolbens 13 von einem Normdurchmesser oder einem erwartetem Durchmesser sind tolerierbar und wirken nicht auf die Befestigung des Schraubrings 81 an dem Spannschraubring 65 bzw. dem Rotationsantrieb 11 zurück.

### Bezugszeichenliste

- 9: Rotationsverdampfer
- 11: Rotationsantrieb
- 13: Verdampferkolben
- 15: Dampfdurchführung
- 17: Kühler
- 19: Auffangkolben
- 21: Vakuumanschluss
- 23: Lift
- 25: Bedieneinheit
- 27: Nabe
- 29: Klemmhülse
- 31: Längsachse der Nabe
- 31': Längsachse der Klemmhülse
- 33: Schliffklemme
- 35: vorderes axiales Ende der Klemmhülse
- 37: hinteres axiales Ende der Klemmhülse
- 39: vorderer Klemmabschnitt
- 41: hinterer Klemmabschnitt
- 43: Durchbrechung
- 45: Klemmsegment
- 47: mittlerer Abschnitt der Klemmhülse
- 49: Vertiefung
- 51: Ringsteg
- 53: Ringsteg
- 55: vorderes axiales Ende der Nabe
- 57: hinteres axiales Ende der Nabe
- 59: vorderer Kontaktabschnitt
- 61: hinterer Kontaktabschnitt

- 63: mittlerer Nabenabschnitt
- 65: Spannschraubring
- 67: Außengewinde
- 69: Stirnfläche
- 71: Freiraum
- 73: Freiraum
- 75: Ringsteg
- 77: Dichtungsring
- 79: Kühleranschluss
- 81: Schraubring
- 83: Schnappverbinder
- 85: Schwenkarm
- 87: Halteabschnitt
- 89: Bördelrand
- 91: Anlenkzapfen
- 93: Abdrückabschnitt
- 95: Verbindungssteg
- 97: Steg
- 99: Schwenkvertiefung
- 101: Zentrierabschnitt
- 103: Endabschnitt
- 105: Endabschnitt
- 107: Rille

## Patentansprüche

1. Rotationsverdampfer mit einer Vorrichtung (33) zum Sichern einer eine Schliffhülse und einen Schliffkern umfassenden Schliffverbinlung zwischen einem schliffhülsenseitigen Laborgerät (13), insbesondere einem Verdampferkolben, und einem schliffkernseitigen Laborgerät (15), insbesondere einer Dampfdurchführung, wobei die Sicherungsvorrichtung (33) schliffkernseitig einen Befestigungsabschnitt (81) und schliffhülsenseitig einen an dem Befestigungsabschnitt (81) zwischen einer Freigabestellung und einer Haltestellung verschwenkbar gelagerten Schnappverbinder (83) aufweist, um das schliffhülsenseitige Laborgerät (13) wahlweise freizugeben oder festzuhalten, wobei der Schnappverbinder (83) einen Halteabschnitt (87) umfasst, der dazu ausgelegt ist, in der Haltestellung des Schnappverbinders (83) einen Bördelrand (89) des schliffhülsenseitigen Laborgeräts (13) zu hintergreifen, wobei der Halteabschnitt (87) des Schnappverbinders (83) teilringförmig mit einem sich über mehr als 180° erstreckenden Kreisbogen ausgebildet ist, und wobei der Halteabschnitt (87) federelastisch verformbar ausgebildet ist.

2. Rotationsverdampfer nach Anspruch 1,
**dadurch gekennzeichnet,**
**dass** der Befestigungsabschnitt (81) als Schraubring, insbesondere mit einem Innengewinde, ausgebildet ist.

3. Rotationsverdampfer nach Anspruch 2,
**dadurch gekennzeichnet,**
**dass** der Schraubring (81) auf ein Außengewinde eines Bauteils (65), durch das das schliffkernseitiges Laborgerät (15), insbesondere die Dampfdurchführung (15), hindurchführbar ist, insbesondere eines Spannorgans (65) zum Verspannen eines Klemmeinsatzes (29) zum Verklemmen der Dampfdurchführung (15) in einer Nabe (27) eines Rotationsantriebs (11) des Rotationsverdampfers (9), oder des schliffkernseitigen Laborgeräts (15) aufschraubbar ist.

4. Rotationsverdampfer nach zumindest einem der vorstehenden Ansprüche,
**dadurch gekennzeichnet,**
**dass** der Schnappverbinder (83) zwei Schwenkarme (85) aufweist, die jeweils an einer von zwei einander insbesondere diametral gegenüberliegenden Seiten des Befestigungsabschnitts (81) an dem Befestigungsabschnitt (81) angelenkt sind.

5. Rotationsverdampfer nach zumindest einem der vorstehenden Ansprüche,
**dadurch gekennzeichnet,**
**dass** der Halteabschnitt (87) eine Ebene festlegt, die in der Haltestellung des Schnappverbinders (83) zumindest im Wesentlichen senkrecht zu einer Längs- und/oder Drehachse des Befestigungsabschnitts (81) verläuft.

6. Rotationsverdampfer nach zumindest einem der vorstehenden Ansprüche,
**dadurch gekennzeichnet,**
**dass** die Schwenkachse des Schnappverbinders (83) den Befestigungsabschnitt (81) mittig durchsetzt.

7. Rotationsverdampfer nach zumindest einem der vorstehenden Ansprüche,
**dadurch gekennzeichnet,**
**dass** der Schwenkbereich des Schnappverbinders (83) einen Wert zwischen 60° und 120° aufweist, wobei bevorzugt der Wert zumindest im Wesentlichen 90° beträgt.

8. Rotationsverdampfer nach zumindest einem der vorstehenden Ansprüche,
**dadurch gekennzeichnet,**
**dass** Befestigungsabschnitt (81) einen Abdrückabschnitt (93) und/oder -mechanismus aufweist, durch den das schliffhülsenseitige Laborgerät (13) von dem schliffkernseitigen Laborgerät (15) abdrückbar ist.

9. Rotationsverdampfer nach zumindest einem der vorstehenden Ansprüche,
**dadurch gekennzeichnet,**
**dass** an der Außenseite des Befestigungsabschnitts (81) eine Greifriffelung vorgesehen ist.

10. Rotationsverdampfer nach zumindest einem der vorstehenden Ansprüche,
**dadurch gekennzeichnet,**
**dass** der Befestigungsabschnitt (81) und der Schnappverbinder (83) jeweils einstückig und/oder aus Kunststoff ausgebildet sind.

11. Rotationsverdampfer nach zumindest einem der vorstehenden Ansprüche,
**dadurch gekennzeichnet,**
**dass** ein Spannorgan (65) zum Verspannen eines Klemmeinsatzes (29) zum Verklemmen der Dampfdurchführung (15) in einer Nabe (27) eines Rotationsantriebs (11) des Rotationsverdampfers (9) vorgesehen ist, wobei die Sicherungsvorrichtung (33) an dem Spannorgan (65) und das Spannorgan (65) an einem Rotationsantrieb (11) des Rotationsverdampfers (9) befestigbar ist.

12. Vorrichtung zum Sichern einer eine Schliffhülse und einen Schliffkern umfassenden Schliffverbindung zwischen zwei Laborgeräten (13, 15), insbesondere zwischen einem Verdampferkolben (13) und einer Dampfdurchführung (15) eines Rotationsverdampfers (9), wobei die Sicherungsvorrichtung (33) schliffkernseitig einen Befestigungsabschnitt (81) und schliffhülsenseitig einen an dem Befestigungsabschnitt (81) zwischen einer Freigabestellung und einer Haltestellung verschwenkbar gelagerten Schnappverbinder (83) aufweist, um das schliffhülsenseitige Laborgerät (13) wahlweise freizugeben oder festzuhalten, wobei der Schnappverbinder (83) einen Halteabschnitt (87) umfasst, der dazu ausgelegt ist, in der Haltestellung des Schnappverbinders (83) einen Bördelrand (89) des schliffhülsenseitigen Laborgeräts (13) zu hintergreifen, wobei der Halteabschnitt (87) des Schnappverbinders (83) teilringförmig mit einem sich über mehr als 180° erstreckenden Kreisbogen ausgebildet ist, und wobei der Halteabschnitt (87) federelastisch verformbar ausgebildet ist.

## Claims

1. A rotary evaporator having an apparatus (33) for the securing of a ground connection including a ground sleeve and a ground core between a piece of laboratory equipment (13) at the ground sleeve side, in particular an evaporator flask, and a piece of laboratory equipment (15) at the ground core side, in particular a steam leadthrough, wherein the securing device (33) has a fastening section (81) at the ground core side and a snap connector (83) at the ground sleeve side pivotably supported at the fastening section (81) between a release position and a holding position in order selectively to release or firmly hold the piece of laboratory equipment (13) at the ground sleeve side, wherein the snap connector (38) includes a holding section (87) which is adapted to engage behind a flanged rim (89) of the piece of laboratory equipment (13) at the ground sleeve side in the holding position of the snap connector (83), wherein the holding section (87) of the snap connector (83) is designed in part ring shape with a circle arc extending over more than 180°, and wherein the holding section (87) is designed as spring elastically deformable.

2. A rotary evaporator in accordance with claim 1,
**characterized in that**
the fastening section (81) is designed as a ring nut, in particular having an internal thread.

3. A rotary evaporator in accordance with claim 2,
**characterized in that**
the ring nut (81) can be screwed onto an external thread of a component (65) through which the piece of laboratory equipment (15), in particular the steam leadthrough (15), at the ground core side, can be led, in particular of a clamping member (65) for the clamping of a clamping insert (29) for the clamping of the steam leadthrough (15) in a hub (27) of a rotary drive (11) of the rotary evaporator (9), or of the piece of laboratory equipment (15) at the ground core side.

4. A rotary evaporator in accordance with at least one of the preceding claims,
**characterized in that**
the clamp connector (83) has two pivot arms (85) which are each pivotally connected to the fastening section (81) at one of two sides of the fastening section (81) opposite one another, in particular diametrically opposite one another.

5. A rotary evaporator in accordance with at least one of the preceding claims,
**characterized in that**
the holding section (87) defines a plane which extends at least substantially perpendicular to a longitudinal axis and/or to an axis of rotation of the fastening section (81) in the holding position of the snap connector (83).

6. A rotary evaporator in accordance with at least one of the preceding claims,
**characterized in that**
the pivot axis of the snap connector (83) centrally passes through the fastening section (81).

7. A rotary evaporator in accordance with at least one of the preceding claims,
**characterized in that**
the pivot range of the snap connector (83) has a value between 60° and 120°, with the value preferably amounting to at least substantially 90°.

8. A rotary evaporator in accordance with at least one of the preceding claims,
**characterized in that**
the fastening section (81) has a press-off section (93) and/or a press-off mechanism by which the piece of laboratory equipment (13) at the ground sleeve side can be pressed off the piece of laboratory equipment (15) at the ground core side.

9. A rotary evaporator in accordance with at least one of the preceding claims,
**characterized in that**
a gripping corrugation is provided at the outer side of the fastening section (81).

10. A rotary evaporator in accordance with at least one of the preceding claims,
**characterized in that**
the fastening section (81) and the snap connector (83) are each made in one piece and/or from plastic.

11. A rotary evaporator in accordance with at least one of the preceding claims,
**characterized in that**
a clamping member (65) for the clamping of a clamping insert (29) for the clamping of the steam leadthrough (15) in a hub (27) of a rotary drive (11) of the rotary evaporator (9) is provided, with the securing apparatus (33) being fastenable to the clamping member (65) and the clamping member (65) being fastenable to a rotary drive (11) of the rotary evaporator (9).

12. An apparatus for the securing of a ground connection including a ground sleeve and a ground core between two pieces of laboratory equipment (13, 15), in particular between an evaporator flask (13) and a steam leadthrough (15) of a rotary evaporator (9), wherein the securing device (33) has a fastening section (81) at the ground core side and a snap connector (83) at the ground sleeve side pivotably supported at the fastening section (81) between a release position and a holding position in order selectively to release or firmly hold the piece of laboratory equipment (13) at the ground side, wherein the snap connector (83) includes a holding section (87) which is adapted to engage behind a flanged rim (89) of the piece of laboratory equipment (13) at the ground sleeve side in the holding position of the snap connector (83), wherein the holding section (87) of the snap connector (83) is designed in part ring shape with a circle arc extending over more than 180°, and wherein the holding section (87) is designed as spring elastically deformable.

## Revendications

1. Évaporateur rotatif comprenant un dispositif (33) pour bloquer une jonction rôdée, comprenant un goulot rôdé et un bouchon rôdé, entre un appareil de laboratoire (13) côté du goulot rôdé, en particulier une ampoule d'évaporateur, et un appareil de laboratoire (15) du côté du bouchon rôdé, en particulier une traversée à vapeur, dans lequel le dispositif de blocage (33) comprend, du côté du bouchon rôdé, un tronçon de fixation (81) et, du côté du goulot rôdé, un dispositif de liaison à encliquetage (83) monté en pivotement sur le tronçon de fixation (81) entre une position de libération et une position de maintien, afin de libérer ou d'immobiliser au choix l'appareil de laboratoire (13) du côté du goulot rôdé, dans lequel le dispositif de liaison à encliquetage (83) comprend un tronçon de maintien (87) qui est conçu pour, dans la position de maintien du dispositif de liaison à encliquetage (83), engager par l'arrière une bordure moletée (89) de l'appareil de laboratoire du côté du goulot rôdé (13), et le tronçon de maintien (87) du dispositif de liaison à encliquetage (83) est réalisé sous forme circulaire partielle avec un arc de cercle s'étendant sur plus de 180°, et dans lequel le tronçon de maintien (87) est réalisé déformable élastiquement à la manière d'un ressort.

2. Évaporateur rotatif selon la revendication 1,
**caractérisé en ce que** le tronçon de fixation (81) est réalisé sous forme de bague à visser, en particulier avec un taraudage.

3. Évaporateur rotatif selon la revendication 2,
**caractérisé en ce que** la bague à visser (81) est susceptible d'être vissée sur un filetage d'un composant (65), à travers lequel l'appareil de laboratoire (15) du côté du bouchon rôdé, en particulier la traversée à vapeur (15), peut être passé, en particulier d'un organe de serrage (65) pour serrer un insert de coincement (29) destiné à coincer la traversée à vapeur (15) dans un moyeu (27) d'un entraînement de rotation (11) de l'évaporateur rotatif (9), ou de l'appareil de laboratoire (15) du côté du bouchon rôdé.

4. Évaporateur rotatif selon l'une au moins des revendications précédentes,
**caractérisé en ce que** le dispositif de liaison à encliquetage (83) comprend deux bras pivotants (85), qui sont respectivement articulés sur le tronçon de fixation (81) sur un côté, parmi deux côtés en particulier mutuellement diamétralement opposés du tronçon de fixation (81).

5. Évaporateur rotatif selon l'une au moins des revendications précédentes,
**caractérisé en ce que** le tronçon de maintien (87) définit un plan qui, dans la position de maintien du dispositif de liaison à encliquetage (83), s'étend au moins sensiblement perpendiculairement à un axe longitudinal et/ou un axe de rotation du tronçon de fixation (81).

6. Évaporateur rotatif selon l'une au moins des revendications précédentes,
**caractérisé en ce que** l'axe de pivotement du dispositif de liaison à encliquetage (83) traverse le tronçon de fixation (81) au milieu.

7. Évaporateur rotatif selon l'une au moins des revendications précédentes,
**caractérisé en ce que** la plage de pivotement du dispositif de liaison à encliquetage (83) présente une valeur entre 60° et 120°, et la valeur s'élève de préférence au moins sensiblement à 90°.

8. Évaporateur rotatif selon l'une au moins des revendications précédentes,
**caractérisé en ce que** le tronçon de fixation (81) comprend un tronçon et/ou un mécanisme de pressage (93), au moyen duquel l'appareil de laboratoire du côté du goulot rôdé (13) peut être pressé en éloignement de l'appareil de laboratoire du côté du bouchon rôdé (15).

9. Évaporateur rotatif selon l'une au moins des revendications précédentes,
**caractérisé en ce qu'**il est prévu des cannelures de préhension sur le côté extérieur du tronçon de fixation (81).

10. Évaporateur rotatif selon l'une au moins des revendications précédentes,
**caractérisé en ce que** le tronçon de fixation (81) et le dispositif de liaison à encliquetage (83) sont respectivement réalisés d'une seule pièce et/ou en matière plastique.

11. Évaporateur rotatif selon l'une au moins des revendications précédentes,
**caractérisé en ce qu'**il est prévu un organe de serrage (65) pour serrer un insert de coincement (29) destiné à coincer la traversée à vapeur (15) dans un moyeu (27) d'un entraînement rotatif (11) de l'évaporateur rotatif (9), et le dispositif de blocage (33) est susceptible d'être fixé sur l'organe de serrage (65), et l'organe de serrage (65) sur un entraînement de rotation (11) de l'évaporateur rotatif (9).

12. Dispositif pour bloquer une jonction rôdée comprenant un goulot rôdé et un bouchon rôdé entre deux appareils de laboratoire (13, 15), en particulier entre une ampoule d'évaporateur (13) et une traversée à vapeur (15) d'un évaporateur rotatif (9), dans lequel le dispositif de blocage (33) comprend, du côté du bouchon rôdé, un tronçon de fixation (81) et du côté du goulot rôdé, un dispositif de liaison à encliquetage (83) monté en pivotement sur le tronçon de fixation (81) entre une position de libération et une position de maintien, afin de libérer ou d'immobiliser au choix l'appareil de laboratoire (13) du côté du goulot rôdé, dans lequel le dispositif de liaison à encliquetage (83) comprend un tronçon de maintien qui est conçu pour, dans la position de maintien du dispositif de liaison à encliquetage (83), engager par l'arrière une bordure moletée (89) de l'appareil de laboratoire du côté du goulot rôdé (13), et le tronçon de maintien (87) du dispositif de liaison à encliquetage (83) est réalisé sous forme circulaire partielle avec un arc de cercle étendant sur plus de 180°, et dans lequel le tronçon de maintien (87) est réalisé déformable élastiquement à la manière d'un ressort.
